# EUROPÄISCHE PATENTSCHRIFT

(11) **EP 2 666 805 B1**
(45) Veröffentlichungstag und Bekanntmachung des Hinweises auf die Patenterteilung: **22.10.2014**
(21) Anmeldenummer: 12169535.7
(22) Anmeldetag: 25.05.2012
(51) Int. Cl.: C08J 5/04, C08J 5/24, C08G 69/14, C08G 69/18, C08G 69/20

(54) **Verfahren zur Herstellung eines Faserverbund-Werkstoffs**
Method for manufacturing a fibre compound material
Procédé de fabrication d'une matière première composite en fibres

(43) Veröffentlichungstag der Anmeldung: 27.11.2013
(73) Patentinhaber: LANXESS Deutschland GmbH, 50569 Köln (DE)
(72) Erfinder: Witt, Michael, 95488 Eckersdorf (DE); Linder, Thomas, 51067 Köln (DE); Büdenbender, Jürgen, 41539 Dormagen (DE); Früh, Thomas, 42105 Wuppertal (DE)

(56) Entgegenhaltungen:
- EP-A2- 2 093 246
- DE-A1-102010 040 027

## Beschreibung

Die vorliegende Erfindung betrifft ein Verfahren zur Herstellung eines Faserverbund-Werkstoffs auf Basis von Polyamid.

Faserverstärkte Kunststoffe sind in der Technik als Konstruktionswerkstoffe von zunehmender Bedeutung. Solche Faserverbund-Werkstoffe bestehen aus einer Vielzahl von Verstärkungsfasern, die in einer Matrix eingebettet sind. Derartige Faserverbund-Werkstoffe bieten vielfältige Vorteile gegenüber herkömmlichen Materialien, z.B. eine hohe, an Belastungsrichtung und Belastungsart anpassbare Festigkeit und Steifigkeit bei gleichzeitig niedriger Dichte, gute Alterungs- und Korrosionsbeständigkeit, viele Kombinationsmöglichkeiten von Fasern und Matrix-Materialien und hoch integrative Gestaltungsmöglichkeiten. Insbesondere im Bereich der Fortbewegungsmittel, wie z.B. Luftfahrt oder Kraftfahrzeugen gewinnen Faserverbund-Werkstoffe zunehmend aufgrund dieser Vorteile an Bedeutung.

Grosse Bedeutung kommt bei der Herstellung von Faserverbund-Werkstoffen der Verbindung von Fasern und Matrix und insbesondere der Haftung zwischen diesen Komponenten zu. Um die Faser-Matrix-Haftung hinsichtlich ihrer Stärke zu beeinflussen und zu optimieren, werden Verstärkungsfasern meist vorbehandelt, um die geringe chemische Ähnlichkeit zwischen Fasern und umgebender Matrix (z.B. Kunststoff) auszugleichen. Dazu werden der sogenannten Schlichte, welche während der Herstellung auf die Faser aufgebracht wird und die zur Weiterbehandlung (Weben, Legen, Nähen) der Fasern notwendig ist, regelmäßig Haftvermittler zugesetzt. Ist die Schlichte oder der aufgebrachte Haftvermittler für die spätere Bestimmung nicht geeignet, muss diese Schlichte nach dem Webprozess wieder von der Faser entfernt und in einem zusätzlichen Arbeitsschritt ein passender Haftvermittler aufgebracht werden. Die entsprechend aufgebrachten Stoffe bilden auf einer Faseroberfläche eine Schicht, weswegen auch von einer Grenzschicht zwischen Faser und Matrix gesprochen wird. Es ist bekannt, dass eine Vielzahl unterschiedlicher Haftvermittler zur Verfügung steht, wobei je nach Matrixmaterial und Fasermaterial ein geeigneter Vermittler oder eine geeignete Mischung von Haftvermittlern auszuwählen ist.

Die Fasern sind eigentlicher Träger der Festigkeit und Steifigkeit und ihre Anordnung bestimmt die mechanischen Eigenschaften des Faserverbund-Werkstoffs. Die Matrix dient in erster Linie zum Einleiten der aufzunehmenden Kräfte in die einzelnen Fasern und zum räumlichen Halten der Fasern in einer gewünschten Raumform.

Bei Faserverbundkunststoffen ist insbesondere zwischen solchen mit einer duroplastischen Matrix und solchen mit einer thermoplastischen Matrix zu unterscheiden.

Erstgenannte Faserverbund-Werkstoffe sind in der Lage, im Belastungsfall große Energiemengen bzw. Kräfte aufzunehmen, bevor es zum totalen Versagensfall kommt. Als totaler Versagensfall ist in diesem Zusammenhang zu verstehen, dass ein aus dem Faserverbund-Werkstoff gefertigtes Element bzw. Bauteil in mehrere Fragmente zerlegt wird. Ein Problem besteht darin, dass bei Eintritt des totalen Versagensfalls ein Faserverbund-Werkstoff auf Basis einer duroplastischen Matrix regelmäßig einen Sprödbruch erleidet und die damit verbundenen Folgen, wie z.B. herumvagabundierende Bauteilfetzen, inakzeptable und unzulässige Risiken bergen, insbesondere wenn ein solches Bauteil in einem Personenfahrzeug verbaut ist.

Ein weiterer Nachteil von Faserverbund-Werkstoffen mit duroplastischer Matrix ist deren beschränkte Recyclingfähigkeit aufgrund der Kombination verschiedenster Komponenten.

Insbesondere der letztgenannte Nachteil ist bei thermoplastischen Verbundwerkstoffen nicht gegeben, da die Bauteile auf Basis einer thermoplastischen Matrix im Allgemeinen durch einfaches Zerkleinern und Extrudieren neuen Anwendungen im Spritzgussbereich zugeführt werden können.

Bhattacharyya et.al., eXPRESS Polymer Letters Vol.3 No.8 (2009) 525-532 setzt Polyamid 6 in Form von Pellets als Matrix ein und verwendet als Gewebefasern Polyamid 6-Garn, woraus Faserverbund-Werkstoffe über Heißverpressung (hot compaction) und die Verpressung von PA6 Gewebe mit PA6 Folien (film stacking) hergestellt werden (Polyamid=PA).

Grundlegender Vorteil eines derartigen selbstverstärkten Faserverbundwerkstoffs auf Basis einer thermoplastischen Matrix, bei dem sowohl die Matrix als auch die Fasern aus den gleichen Polymerbausteinen aufgebaut sind, sind die hervorragenden Rezyklierungseigenschaften. Durch ein einfaches Aufschmelzen und Regranulieren (Compoundieren) vermischen sich Faser und Matrix homogen. Das rezyklierte Granulat kann erneut als hochwertiger Rohstoff für die verschiedensten Anwendungen eingesetzt werden.

Die als Stand der Technik beschriebenen zwei Verfahren zur Herstellung selbstverstärkter Polyamid-Verbundkunststoffe haben insbesondere die folgenden Nachteile:

### 1. "hot compaction"-Verfahren:

Das Verfahren ist sehr empfindlich gegenüber geringen Schwankungen bei der Prozessführung, beispielsweise hinsichtlich der Presstemperatur, des Pressdruckes, der Verweilzeit und der Qualität/Reinheit oder der Kristallinität der Einsatzstoffe. Diese Änderungen wirken sich drastisch auf die Bruttozusammensetzung des Verbundkunststoffes aus, d.h. auf das Verhältnis von textiler Verstärkung zur Matrix. Zudem können über dieses Verfahren keine dreidimensional geformten Verbundfaserplatten hergestellt werden. Nach der Herstellung von Platten muss über einen weiteren Thermoform-Prozess das Bauteil umgeformt werden.

### 2. "film stacking":

Das "film stacking"-Verfahren hat insbesondere den Nachteil, dass bei ebenfalls aufwendiger Konsolidierung die Anbindung der Einzelfasern an die Matrix oft mangelhaft ist. Die hohe Schmelzeviskosität der als Folie eingebrachten Matrix ist für die schlechte Faseranbindung die Ursache.

Aufgabe der vorliegenden Erfindung war es daher, ein Verfahren zu entwickeln, das die Nachteile des Standes der Technik ausschließt und trotzdem zu einem Faserverbund-Werkstoff führt, der nur aus einem einzigen Kunststoff, bevorzugt Polyamid besteht.

Lösung der Aufgabe und somit Gegenstand der vorliegenden Erfindung ist ein Verfahren zur Herstellung eines Faserverbund-Werkstoffs, **dadurch gekennzeichnet, dass** man
a) als Monomer wenigstens ein monomeres cyclisches Amid in Anwesenheit wenigstens eines Katalysators und in Anwesenheit wenigstens eines Aktivators auf einen Temperaturbereich von 100°C bis 200°C aufheizt und aufschmelzen lässt,
b) die Schmelze aus Stufe a) mit einer Polyamid-Verstärkungsstruktur in Kontakt bringt, bei der es sich um hochverstreckte Polyamidfäden handelt,
c) das Monomere durch Temperaturerhöhung auf 100°C bis 200°C erwärmt, polymerisiert und gegebenenfalls den so hergestellten Faserverbund-Werkstoff noch tempert, und
d) den als Gußkörper vorliegenden Faserverbund-Werkstoff aus der Form entnimmt.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

Überraschenderweise zeigt das erfindungsgemäße Verfahren, dass hochverstreckte Polyamidfäden sich nicht im heißen Lactam lösen und auch die durch die exotherme Polymerisation und die Kristallisation verursachte Temperaturerhöhung ohne signifikante Schädigung überstehen. Amorphe Polyamide, auch gering verstreckte Polyamidfolien, lösen sich dagegen in heißem Caprolactam bereits innerhalb weniger Minuten.

Textile Verstärkungsmaterialien aus endlos-Polyamid Fäden bzw. Rovings können damit direkt mit monomeren cyclischen Amiden, bevorzugt Caprolactam, getränkt werden und über anionische in-situ Polymerisation in einer Form auspolymerisiert werden (RIM PA6-Verfahren bzw. structural RIM bzw. T-RTM Verfahren). Das erfindungsgemäße Verfahren ermöglicht damit eine "direkte" Konsolidierung auch komplex geformter Bauteile; die oben beschriebenen Nachteile der "film stacking" und "hot compaction" Technologie werden vermieden.

Als monomere cyclische Amide, auch als Lactam bezeichnet, werden bevorzugt Verbindungen der allgemeinen Formel (I) 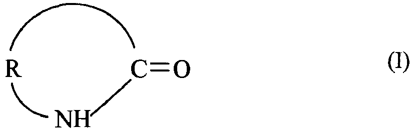 eingesetzt, wobei R eine Alkylengruppe mit 3 bis 13 Kohlenstoffatomen darstellt. Auch Mischungen dieser Lactame können eingesetzt werden, sofern sie copolymerisiert werden können. Bei den Mischungen werden bevorzugt solche aus ε-Caprolactam und Laurinlactam eingesetzt. Besonders bevorzugt wird jedoch ε-Caprolactam verwendet, das bei der Firma Lanxess Deutschland GmbH kommerziell bezogen werden kann.

Erfindungsgemäß bevorzugt einzusetzende Katalysatoren sind starke Basen, besonders bevorzugt Hydroxide, Metallsalze, Alkoholate oder Organometallverbindungen.

Als bevorzugte Katalysatoren im Sinne der Erfindung können auch Lactam-Magnesium-Halogenide, besonders bevorzugt Bromide, Alkali-Alumo Dilactamate, bevorzugt Natrium, Alkali- und/oder Erdalkalilactamate, bevorzugt Lactamate mit Natrium, Kalium und/oder Magnesium, einzeln oder im Gemisch eingesetzt werden.

Die vorgenannten Katalysatoren sind handelsüblich und sind beispielsweise bei der Firma Rhein Chemie Rheinau GmbH oder bei der Firma KatChem spol.s.r.o. ,Tschechien, erhältlich. Derartige Katalysatoren sind beispielsweise aus Polyamide, Kunststoffhandbuch, 1998, Carl Hanser Verlag bekannt.

Im Rahmen der vorliegenden Erfindung wird besonders bevorzugt ein Katalysator ausgewählt aus der Gruppe bestehend aus Natriumcaprolactamat, Kaliumcaprolactamat, Bromid-Magnesiumcaprolactamat, Chlorid-Magnesiumcaprolactamat, Magnesium-bis-Caprolactamat, Natriumhydrid, Natrium, Natriumhydroxid, Natriummethanolat, Natriumethanolat, Natriumpropanolat, Natriumbutanolat, Kaliumhydrid, Kalium, Kaliumhydroxid, Kaliummethanolat, Kaliumethanolat, Kaliumpropanolat und Kaliumbutanolat eingesetzt. Ganz besonders bevorzugt wird ein Katalysator eingesetzt, ausgewählt aus der Gruppe bestehend aus Natriumhydrid, Natrium und Natriumcaprolactamat; Insbesondere bevorzugt ist der Einsatz von Natriumcaprolactamat und/oder eine Lösung von Natriumcaprolactamat in Caprolactam (z.B. Addonyl® Kat NL der Rhein Chemie Rheinau GmbH bzw. Bruggolen® (BASF, DE) C100; 18 Gew.-% Natriumcaprolactamat in Caprolactam).

Das Molverhältnis von Monomer zu Katalysator kann in weiten Grenzen variiert werden, es beträgt in der Regel von 1:1 bis 10.000: 1, bevorzugt von 10:1 bis 1.000: 1, besonders bevorzugt von 20:1 bis 300:1.

Im erfindungsgemäßen Verfahren wird mindestens ein Aktivator für die anionische Polymerisation eingesetzt.

Unter einem Aktivator für die anionische Polymersisation wird im Rahmen dieser Erfindung ein durch elektrophile Reste N-substituiertes Lactam (z.B. ein Acyllactam) verstanden. Als Aktivator können auch Vorstufen für solche aktivierten N-substituierten Lactame verstanden werden, welche zusammen mit dem Monomer in-situ ein aktiviertes Lactam bilden. Die Aktivatormenge definiert typischerweise die Anzahl der wachsenden Ketten, da jedes Aktivatormolekül das Anfangsglied einer Polymerkette darstellt. Als Aktivator eignen sich generell Isocyanate, Uretdione, Carbodiimide, Säureanhydride und Säurehalogenide bzw. deren Umsetzungsprodukte mit dem Monomer.

Bevorzugt als Aktivatoren einzusetzende Isocyanate sind Verbindungen der Reihe aliphatische Diisocyanate, insbesondere Butylendiisocyanat, Hexamethylendiisocyanat, Octamethylendiisocyanat, Decamethylendiisocyanat, Undecamethylendiisocyanat, Dodecamethylendiisocyanat, 4,4'-Methylenbis(cyclohexylisocyanat), aromatische Diisocyanate, inbesondere Toluyldiisocyanat, Isophorondiisocyanat, 4,4'-Methylenbis(phenyl)isocyanat oder Polyisocyanate, insbesondere Isocyanate von Hexamethylendiisocyanat (Basonat HI 100/BASF SE), Allophanate, insbesondere Ethylallophanat. Insbesondere können Mischungen der genannten Isocyanate als Aktivator eingesetzt werden.

Bevorzugt als Aktivatoren einzusetzende Säurehalogenide sind Verbindungen der Reihe aliphatische Disäurehalogenide, insbesondere Butylen-disäurechlorid, Butylen-disäurebromid, Hexamethylen-disäurechlorid, Hexamethylen-disäurebromid, Octamethylen-disäurechlorid, Octamethylen-disäurebromid, Decamethylen-disäurechlorid, Decamethylen-disäurebromid, Dodecamethylen-disäurechlorid, Dodecamethylen-disäurebromid, 4,4'-Methylen-bis-(cyclohexysäurechlorid), 4,4'-Methylenbis(cyclohexylsäurebromid); als auch aromatische Disäurehalogenide, insbesondere Toluylmethylendisäurechlorid, Toluylmethylendisäurebromid, Isophoron-disäurechlorid, Isophoron-disäurebromid, 4,4'-Methylenbis(phenyl)säurechlorid, 4,4'-Methylenbis(phenyl)säurebromid. Insbesondere können Mischungen der genannten Säurehalogenide als Aktivator eingesetzt werden.

Insbesondere bevorzugt ist ein Verfahren, **dadurch gekennzeichnet, dass** als Aktivator mindestens eine Verbindung eingesetzt und ausgewählt wird aus der Gruppe bestehend aus aliphatischen Diisocyanaten, aromatischen Diisocyanaten, Polyisocyanaten, aliphatischen Disäurehalogeniden , aromatischen Disäurehalogeniden, Uretdionen und Cabodiimiden.

Insbesondere besonders bevorzugt wird als Aktivator wenigstens eine Verbindung der Reihe Uretdione oder Carbodiimide eingesetzt.

Uretdione im Sinne der Erfindung sind Umsetzungsprodukte von mindestens zwei Isocyanaten unter der Ausbildung von mindestens zwei Dioxodiazetidin-Bindungen:

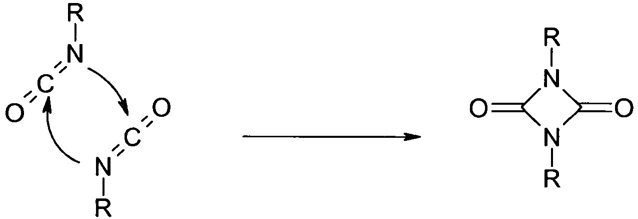

Die Herstellung ist dem Fachmann an sich bekannt und kann beispielsweise gemäß der in EP 1 422 223 A1 beschriebenen Verfahren durchgeführt werden. Die Dimerisierung kann durch basische Katalysatoren wie Pyriden oder tertiäre Phosphane beschleunigt werden.

Das Uretdion kann ein Dimer, Trimer, Oligomer oder Polymer sein.

Erfindungsgemäß bevorzugte Uretdione erhält man aus monomeren aliphatischen Verbindungen, ausgewählt aus der Gruppe Isophorondiisocyanat, 1,4-Cyclohexyldiisocyanat, 1,1-Methylen-bis-(4-isocyanatocyclohexan), 1,2-Bis-(4-isocyanatononyl)-3-heptyl-4-pentyl-cyclohexan und Hexamethylen-1,6-diisocyanat.

Hierbei ist die Verwendung von Isophorondiisocyanat und Hexamethylen-1,6-diisocyanat als Edukt für die Synthese erfindungsgemäß einzusetzender Uretdione besonders bevorzugt.

In einer bevorzugten Ausführungsform wird als Aktivator ein Uretdion verwendet, welches ausgehend von einem aromatischen Isocyanat erhalten wird. Dieses aromatische Isocyanat weist vorzugsweise 6 bis 20 Kohlenstoffatome, besonders bevorzugt 6 bis 15 Kohlenstoffatome, auf. Entsprechende aromatische monomere Isocyanate werden ausgewählt aus der Gruppe 2,4-Diisocyanatotoluol, 2,6-Diisocyanatotoluol, 1,5-Naphthylendiisocyanat, 4,4'-Methylen-diphenyldiisocyanat, 1,3-Bis-(3-isocyanato-4-methylphenyl)-2,4-dioxodiazetidin, N,N'-Bis-(4-methyl-3-isocyanatophenyl)-Harnstoff und Tetramethylxylylendiisocyanat. Von diesen aromatischen Isocyanaten sind 2,4-Diisocyanatotoluol, 2,6-Diisocyanatotoluol und 4,4'-Methylen- bis(phenyldiisocyanat) besonders bevorzugt. Insbesondere bevorzugt sind 2,4-Diisocyanatotoluol und 4,4'-Methylen-bis(phenyldiisocyanat).

Erfindungsgemäß bevorzugte Carbodiimide sind polymere Carbodiimide der Formel (II)

R¹-(-N=C=N-R²-)ₘ-R³ (II)

in der
m einer ganzen Zahl von 2 bis 500, bevorzugt 2 bis 50, ganz besonders bevorzugt 2 bis 20 entspricht,
R¹ = R²-NCO, R²-NHCONHR⁴, R²-NHCONR⁴R⁵ oder R²-NHCOOR⁶,
R² = C₁- C₁₈-Alkylen, C₅-C₁₈-Cycloalkylen-, Arylen und/oder C₇-C₁₈- Aralkylen und
R³ = -NCO, -NHCONHR⁴, -NHCONR⁴R⁵ oder-NHCOOR⁶ist,
wobei in R¹ unabhängig voneinander R⁴ und R⁵ gleich oder verschieden sind und einen C₁-C₆-Alkyl-, C₆-C₁₀-Cycloalkyl- oder C₇-C₁₈-Aralkylrest darstellen und R⁶ eine der Bedeutungen von R¹ hat oder einen Polyester- oder einen Polyamidrest oder -(CH₂)₁-(O-(CH₂)ₖ-O)_{g}-R⁴ bedeutet,
mit 1= 1-3, k= 1-3, g = 0-12 und
R⁴= H oder C₁-C₄-Alkyl.

Ebenfalls einsetzbar sind auch Gemische von polymeren Carbodiimide der Formel (II).

Die Verbindungen nach Formel (II) sind kommerziell erhältlich, z.B. bei der Firma Rhein Chemie Rheinau GmbH oder lassen sich nach den dem Fachmann geläufigen Verfahren herstellen, wie z.B. beschrieben in DE-A-11 30 594 oder US 2 840 589 oder durch die Kondensation von Diisocyanaten, bevorzugt 2,4,6-Triisopropylphenyl-1,3-diisocyanat, 2,4,6-Triethylphenyl-1,3-diisocyanat, 2,4,6-Trimethyl-phenyl-1,3-diisocyanat, 2,4'-Diisocyanatodiphenylmethan, 3,3',5,5'-Tetraisopropyl-4,4'-diisocyanatodiphenylmethan, 3,3',5,5'-Tetraethyl-4,4'-diisocyanato-diphenyl-methan, Tetramethylxyloldiisocyanat, 1,5-Naphthalindiisocyanat, 4,4'-Diphenylmethandiisocyanat, 4,4'-Diphenyldimethyl-methan-diisocyanat, 1,3-Phenylendiisocyanat, 1,4-Phenylendiisocyanat, 2,4-Tolylendiisocyanat, 2,6-Tolylendiisocyanat, ein Gemisch aus 2,4-Tolylendiisocyanat und 2,6-Tolylendiisocyanat, Hexamethylendiisocyanat, Cyclohexan-1,4-diisocyanat, Xylylendiisocyanat, Isophorondiisocyanat, Dicyclohexylmethan-4,4'-di-isocyanat, Methylcyclohexandiisocyanat, Tetramethylxylylen-diisocyanat sowie 1,3,5-Triisopropylbenzol-2,4-diisocyanat oder deren Gemische, unter Abspaltung von Kohlendioxid bei erhöhten Temperaturen, bevorzugt bei 40 °C bis 200°C, in Gegenwart von Katalysatoren. Als Katalysatoren zur Herstellung dieser Verbindungen der Formel (II) haben sich bevorzugt starke Basen oder Phosphorverbindungen bewährt. Vorzugsweise werden Phospholenoxide, Phospholidine oder Phospholinoxide sowie die entsprechenden Sulfide verwendet. Ferner können als Katalysatoren zur Herstellung der Verbindungen der Formel (II) tertiäre Amine, basisch reagierende Metallverbindungen, Carbonsäuremetallsalze und nicht basische Organometallverbindungen verwendet werden.

Als Aktivator kann sowohl die Reinsubstanz, wie oben beschrieben, oder aber bevorzugt eine Lösung des Aktivators in einem Lösungsmittel, insbesondere in N-Methylpyrrolidon oder N-Ethylpyrrolidon, dienen.

Das Molverhältnis von Monomer zu Aktivator kann in weiten Grenzen variiert werden und beträgt in der Regel von 1:1 bis 10.000:1, bevorzugt von 10:1 bis 2.000:1, besonders bevorzugt von 20:1 bis 1.000 zu 1.

Das erfindungsgemäße Verfahren zeichnet sich in einer bevorzugten Ausführungsform dadurch aus, dass zusätzlich zu den Komponenten in Stufe a) mindestens eine weitere Komponente, ausgewählt aus Füll- und/oder Verstärkungsstoffen, Polymeren oder weiteren Zusatzstoffen eingesetzt wird und die sich chemisch von den in Stufe a) einzusetzenden Komponenten -cyclisches Amid, Katalysator, Aktivator - unterscheiden.

Die Zugabe dieser zusätzlichen Komponenten kann vor oder zusammen mit der Zugabe von Katalysator und/oder Aktivator erfolgen.

Die in Stufe b) des erfindungsgemäßen Verfahrens einzusetzende Schmelze kann deshalb in einer bevorzugten Ausführungsform ein oder mehrere Polymere enthalten. Die Zusammensetzung der in Stufe b) einzusetzenden Schmelze kann in einer bevorzugten Ausführungsform wenigstens ein weiteres Polymer und/oder Oligomer enthalten, welches sich in-situ durch Polymerisation der in der Zusammensetzung enthaltenen Monomere bildet. Dieses optional enthaltene Polymer ist beispielsweise in einer Menge von 0 bis 40 Gew.-%, bevorzugt von 0 bis 20 Gew.-%, besonders bevorzugt in einer Menge von 0 bis 10 Gew.-% enthalten.

Darüber hinaus kann die in Stufe b) einzusetzende Schmelze ein oder mehrere Polymere enthalten, welche in Form eines Polymers zu der Zusammensetzung zugegeben werden. Dieses zugegebene Polymer kann in bevorzugter Ausführungsform Gruppen enthalten, die zur Bildung von Block- und/oder Pfropf-Copolymeren mit dem aus den Monomeren gebildeten Polymeren, geeignet sind. Bevorzugte Gruppen sind Epoxy-, Amin-, Carboxyl-Anhydrid-, Oxazolin-, Carbodiimid-, Urethan-, Isocyanat- und Lactam-Gruppen. Polymere mit Carbodiimid-Gruppen werden dann eingesetzt, wenn kein Carbodiimid als Aktivator eingesetzt wird.

Zudem besteht die Möglichkeit zur Verbesserung der Produkteigenschaften, Verträglichkeiten der Komponenten und Viskosität der in Stufe b) einzusetzenden Schmelze mindestens ein Polymer zuzugeben ausgewählt aus der Gruppe bestehend aus Polystyrol, Styrol-Copolymersiate, insbesondere Styrol-Acrylnitril-Copolymere (SAN), Acrylnitril-Butadien-Styrol-Copolymere (ABS) oder Styrol-Butadien-Copolymere (SB), Polyphenylenoxidether, Polyolefine, insbesondere Polyethylen (HTPE (high-temperature-polyethylene), LTPE (low-temperature-polyethylene), Polypropylen oder Polybuten-1, Polytetrafluorethylen, Polyester, insbesondere Polyethylenterephthalat (PET); Polyamide, Polyether, insbesondere Polyethylenglykol (PEG), Polypropylenglykol oder Polyethersulfone (PESU oder PES); Polymere aus Vinylgruppen enthalten Monomeren, insbesondere Polyvinylchlorid, Polyvinylidenchloride, Polystryrol, schlagzähmodifiziertes Polystyrol, Polyvinylcarbazol, Polyvinylacetat oder Polyvinylalkohol, Polyisobutylene, Polybutadien und Polysulfone. Es ist weiterhin die Verwendung von Copolymeren als Polymer möglich, die aus den Monomereinheiten der oben genannten Polymere bestehen.

Die Zugabe von Polymeren kann in Stufe a) des erfindungsgemäßen Verfahrens in bevorzugter Ausführungsform vor oder zusammen mit der Zugabe an Katalysator und/oder Aktivator erfolgen. Die Zugabe von Polymer kann insbesondere der Einstellung der Viskosität der Schmelze dienen. Das Polymer kann im Monomer gelöst oder dispergiert vorliegen.

Für den Fall, dass das Polymer/die Polymere im Monomer gelöst vorliegen, beträgt der Anteil Polymer an der Schmelze bevorzugt weniger als 40 Gew.-%. Für den Fall, dass das Polymer/die Polymere im Monomer dispergiert vorliegen, beträgt der Anteil Polymer in der Schmelze bevorzugt weniger als 60 Gew.-%.

Die in Stufe b) einzusetzende Schmelze kann in einer bevorzugten Ausführungsform zudem ein vernetzendes Monomer enthalten. Ein vernetzendes Monomer im Sinne der vorliegenden Erfindung ist eine Verbindung, die mehr als eine Gruppe enthält, welche mit dem Monomer copolymerisiert werden kann. Derartige bevorzugte Gruppen sind Epoxy-, Amin-, Carboxyl-, Anhydrid-, Oxazolin-, Carbodiimid-, Urethan-, Isocyanat- und Lactan-Gruppen. Als vernetzende Monomere eignen sich bevorzugt aminosubstituierte Lactame, insbesondere Aminocaprolactam, Aminopiperidon, Aminopyrrolidon, Aminolauryllactam oder deren Mischungen, bevorzugt Aminocaprolactam, Aminopyrrolidon oder deren Mischungen, besonderes bevorzugt Aminocaprolactam. Vernetzende Monomere mit Carbodiimid-Gruppen sind dann einzusetzen, wenn kein Carbodiimid als Aktivator eingesetzt wird.

In einer bevorzugten Ausführungsform enthält die in Stufe b) einzusetzende Schmelze mindestens einen Füll- und/oder Verstärkungsstoff. Als Füll und/oder Verstärkungsstoffe kommen organische oder anorganische Füll- und/oder Verstärkungsstoffe in Frage. Bevorzugt sind anorganische Füllstoffe, insbesondere Kaolin, Kreide, Wollastonit, Talkum, Calciumcarbonat, Silikate, Titandioxid, Zinkoxid, Graphit, Graphene, Glaspartikel (z.B. Glaskugeln), nanoskalige Füllstoffe, (wie Kohlenstoff-Nanoröhren carbonanotubes), carbon black, Schichtsilikate, nanoskalige Schichtsilikate, nanoskaliges Aluminiumoxid (Al₂O₃), nanoskaliges Titandioxid (TiO₂) und nanoskaliges Siliciumdioxid (SiO₂).

Weiterhin bevorzugt ist der Einsatz von Faserstoffen als Füll- und/oder Verstärkungsstoff. Die Füll- und/oder Verstärkungsstoffe werden in der Regel ausgewählt aus der Gruppe umfassend Mineralien in für Thermoplastanwendungen üblicher Korngröße, insbesondere Kaolin, Kreide, Wollastonit oder Talkum, Kohlenstoff- oder Glasfasern, bevorzugt gemahlene Glasfasern, bevorzugt Glas- und Kohlenstofffasern. Bevorzugt sind die Fasern mit einem geeigneten Schlichtesystem, enthaltend u.a. bevorzugt Haftvermittler insbesondere auf Silanbasis, ausgerüstet.

Besonders bevorzugt sind Haftvermittler auf Silanbasis der allgemeinen Formel (III)

(X-(CH₂)_{q})ₖ-Si-(O-CᵣH₂ᵣ₊₁)₄₋ₖ (III)

worin
- x: für NH₂-, HO- oder 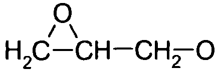 steht,
- q: für eine ganze Zahl von 2 bis 10, bevorzugt 3 bis 4 steht,
- r: für eine ganze Zahl von 1 bis 5, bevorzugt 1 bis 2 steht und
- k: für eine ganze Zahl von 1 bis 3, bevorzugt 1 steht.

Ganz besonders bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X in Formel (III) eine Glycidylgruppe enthalten.

Für die Ausrüstung der Füllstoffe werden bevorzugt Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Besonders bevorzugt kommen ein oder mehrere Faserstoffe zum Einsatz, ausgewählt aus bekannten anorganischen Verstärkungsfasern, insbesondere Borfasern, Glasfasern, Kohlenstofffasern, Kieselsäurefasern, Keramikfasern und Basaltfasern; organischen Verstärkungsfasern, insbesondere Aramidfasern, Polyesterfasern, Nylonfasern, Polyethylenfasern; und Naturfasern, insbesondere Holzfasern, Flachsfasern, Hanffasern und Sisalfasern. Insbesondere bevorzugt ist der Einsatz von Glasfasern, insbesondere Schnittglasfasern, Kohlenstofffasern, Aramidfasern, Borfasern, Metallfasern oder Kaliumtitanatfasern.

Insbesondere können auch Mischungen der genannten Füll- und/oder Verstärkungsstoffe eingesetzt werden. Besonders bevorzugt werden als Füll- und/oder Verstärkungsstoffe Glasfasern und/oder Glaspartikel, insbesondere Glaskugeln, ausgewählt.

Die in Stufe b) einzusetzende Schmelze enthält bevorzugt 1 bis 90 Gew.-%, insbesondere von 2-80 Gew.-%, bevorzugt 5 bis 30 Gew.-%, weiterhin bevorzugt von 10 bis 20 Gew.-% an mindestens einem Füll- und/oder Verstärkungsstoff.

In einer bevorzugten Ausführungsform enthält die in Stufe b) einzusetzende Schmelze weitere Zusatzstoffe. Bevorzugt sind die Zusatzstoffe in einer Menge von 0 bis 5 Gew.-%, besonders bevorzugt von 0 bis 4 Gew.-%, ganz besonders bevorzugt von 0 bis 3,5 Gew.-% in der Zusammensetzung enthalten. Als Zusatzstoffe können bevorzugt Stabilisatoren, insbesondere Kupfersalze, Farbstoffe, Antistatika, Füllöle, Stabilisatoren, Oberflächenverbesserer, Sikkative, Entformungs-Hilfsmittel, Trennmittel, Antioxidantien, Lichtstabilisatoren, PVC-Stabilisatoren, Gleitmittel, Flammschutzmittel, Treibmittel, Schlagzähmmodifikatoren und Nukleierungshilfsmittel zugesetzt werden.

Bevorzugt enthält die in Stufe b) einzusetzende Schmelze als Zusatzstoff einen Schlagzähigkeitsverbesserer, insbesondere ein Polydien-Polymer (z.B. Polybutadien, Polyisopren) enthaltend Anhydrid und/oder Epoxigruppen. Das Polydien-Polymer weist insbesondere eine Glasübergangstemperatur unter 0 °C, bevorzugt unter -10 °C, besonders bevorzugt unter -20 °C auf. Das Polydien-Polymer kann auf der Basis eines Polydien-Copolymers mit Polyacrylaten, Polyethylenacrylaten und/oder Polysiloxanen basieren und mittels der gängigen Verfahren hergestellt werden (z.B. Emulsionspolymerisation, Suspensionspolymerisation, Lösungspolymerisation, Gasphasenpolymerisation).

Weiterhin bevorzugt enthält die in Stufe b) einzusetzende Schmelze als Zusatzstoffe Polyole, die ebenfalls die Schlagzähigkeit verbessern. Ein derartig geeignetes Polyol wird beispielsweise von der Rhein Chemie Rheinau GmbH unter der Bezeichnung Addonyl^{®} 8073 kommerziell angeboten; ebenfalls sind Polyol-triamine geeignet, die Tieftemperatur-Schlagzähigkeit zu verbessern. Ein geeignetes Produkt ist Addonyl® 8112; beide Addonyl-Additive werden bevorzugt im Konzentrationsbereich 1 - 20 Gew.-% eingesetzt.

Die optionale Zugabe von Füll- und/oder Verstärkungsstoffen und weiteren Zusatzstoffen kann vor oder zusammen mit der Zugabe von Katalysator und/oder Aktivator erfolgen.

Die Bereitstellung der mit Katalysator und Aktivator versetzten Monomerschmelze für den Verfahrensschritt b) kann in Stufe a) auf unterschiedliche Weise erfolgen:

### Variante a1) sogenanntes Zwei-Topf-Verfahren:

### (siehe z.B. Vieweg, Müller; Kunststoff-Handbuch Bd. VI, Carl Hanser Verlag, München, 1966.)

Zu diesem Zweck werden üblicherweise zwei Mischungen aus Katalysator und Lactam sowie aus Aktivator und Lactam in Form von flüssigen Schmelzen frisch vor der Polymerisation zunächst getrennt voneinander hergestellt, dann miteinander vermischt und anschließend in einer Gussform polymerisiert. Dieses Vorgehen soll sicherstellen, dass es im Vorfeld zu keinen unerwünschten Reaktionen kommt.

### Variante a2):

Es ist ebenfalls möglich, Aktivator, Katalysator und Additive bei geringer Temperatur zunächst im monomeren Caprolactam zu lösen oder im Extruder eine Mischung -auch unterhalb des Schmelzpunktes- herzustellen, die Mischung auf Schmelztemperatur zu erwärmen und dann für die Tränkung der Polyamidfäden zu verwenden.

Die Polymerisation des erfindungsgemäßen Verfahrens erfolgt in Stufe c) des erfindungsgemäßen Verfahrens bevorzugt in einer vorgeheizten Guss-Form in der zuvor die Polyamid Verstärkungsstruktur, bevorzugt Fäden, Filamente, Gewebe oder Rovings entsprechend dem zu formenden Formkörper eingelegt wurde. Diese Polyamid-Verstärkungsfäden werden dann mit der Monomermischung, die zumindest Aktivator und Initiator, optional weitere Additive und Comonomerbausteine enthält, getränkt.

Erfindungsgemäß bevorzugt wird die Guss-Form auf einen Temperaturbereich von 100°C bis 200°C, besonders bevorzugt 120°C bis 180°C vorgeheizt.

Die Polymerisation erfolgt vorzugsweise gemäß den im Kunststoffhandbuch Bd. 3/4 Technische Thermoplaste, Hanser Fachbuch, Seiten 413-430 beschriebenen Verfahren.

Bevorzugt wird der Gusskörper unmittelbar nach Ende der Polymerisation aus der Form entnommen wenn Caprolactam als Monomer eingesetzt wird, da bei Caprolactam die Polymerisation im Allgemeinen unterhalb der Kristallit-Schmelztemperatur durchgeführt wird.

Um ein mögliches Verziehen des Bauteils zu vermeiden wird in einer bevorzugten Ausführungsform das Bauteil nach der Polymerisation entweder in der Polymerisationsform langsam abgekühlt, oder aber das Bauteil in eine zweite Form überführt, wo das Bauteil fixiert und einer definierten, langsameren Abkühlung unterworfen wird. Eine derartige langsamere Abkühlung ist bevorzugt 5°C/min.; in der Polymerisationsform kann während dieser Temperung bereits der nächste Polymerisationsansatz durchgeführt werden.

In einer bevorzugten Ausführungsform wird das erfindungsgemäße Verfahren aber auch als offenes Verfahren, Variante a3), ausgeführt, besonders bevorzugt bei klassischen Guss-PA 6 Anwendungen im Rotations-Schleuderguss (rotomoulding); als Verstärkungsstruktur werden hier bevorzugt PA-Kurzfilamente/Fasern eingesetzt; auch textile Verstärkungen aus Polyamid-Endlosfasern und textile Verstärkungen aus Polyamid-Fäden bzw. Rovings können bei dem Rotations-Schleuderguss realisiert werden.

Die mittels des erfindungsgemäßen Verfahrens herzustellenden Formkörper werden vorzugsweise als Ersatz für Metallkonstruktionen, bevorzugt im Bereich der Automobilindustrie, eingesetzt.
Beispiele wären Ölwannen für Motor- und Getriebe von PKW und Lkw.

Klassische Guss-PA6 Anwendungen können durch Polyamid-Kurzfasern, aber auch mittels Endlosfasern oder mit Hilfe von aus Polyamidfasern hergestellten textilen Geweben verstärkt werden.

Ein Beispiel für selbstverstärkten Guss-PA6-Rotations-Schleuderguss (rotomoulding) wäre die Behälterfertigung, insbesondere von Tanks (Öl- und Kraftstofftanks).

Das Verstärkungspotential der durch Polyamid-Fasern, Polyamid-Rovings, Polyamid-Gelege und Polyamid-Gewebe verstärkten Guss-Polyamid-Formteile kann folgendermaßen quantifiziert werden:

Für konventionelles PA 6 und für über anionische Polymerisation hergestellte Polyamide (Guss-PA6) finden sich in der Literatur Zugfestigkeiten um 80 MPa, siehe insbesondere http://www.matbase.com/material/polymers/engineering/pa-6/properties, wo für PA 6 explizit Zugfestigkeiten von 45-85 MPa genannt werden.

Während der Herstellung der Polyamid-basierten Mono-/Multifilamente, konkret während der Verstreckung der Polyamid-Fäden, findet eine Orientierung der Polymermoleküle derart statt, dass ein ausgesprochen anisotroper Polymerkettenaufbau und eine hohe Kristallinität resultieren.

Da Polyamid-Filamente bislang nicht für die Verstärkung von Polyamid-Verbundkunststoffen eingesetzt werden, finden sich auch in der Literatur keine direkt vergleichbaren mechanischen Daten, insbesondere keine Zugfestigkeiten (tensile strength).

Um das erfindungsgemäße Potential von PA6 Filamenten als Verstärkungsfaser zu verdeutlichen, müssen die im Textilbereich üblichen Kennwerte umgerechnet werden. Beispielsweise spezifiziert die Firma Polyamide High Performance GmbH, Wuppertal, ihre PA6 Multifilamente mit etwa 750 mN/tex. Bei einer Dichte von 1.2g/ml ergibt die Umrechnung eine Zugfestigkeit von 900 MPa. Für das PA6 Multifilament Enklaton® 540T wird gar ein Wert von 772 mN/TEX angegeben (siehe: www.php-fibers.com/content polyamide/index.php).

Zum Vergleich: E-Glasfasern haben eine Zugfestigkeit von etwa 2000 MPa, dies jedoch bei einer nahezu doppelt so hohen Dichte (2.55 g/ml).

Im Rahmen der Arbeiten zur vorliegenden Erfindung wurde daher gefunden, dass die auf das Fasergewicht normierte Verstärkungsleistung von Polyamidfäden an die Verstärkungsleistung von Glasfasern herankommen kann.

### Ausführungsbeispiele:

Dass weder die heiße Monomerschmelze noch die eine zusätzliche Temperaturerhöhung auslösende Exothermie und die zusätzlich eine Temperaturerhöhung verursachende Kristallisationswärme (Guss-PA 6 wird i.a. unterhalb der Schmelztemperatur der Kristallite polymerisiert) die Fasern signifikant schädigte, wurde mit einem einfachen Zugversuch bestätigt:

### Herstellung eines PA6 Gusskörpers mit hälftig einpolymerisierten Perlonfäden

### Beispiel (erfindungsgemäß):

In einem Dreihalskolben wurden 192.00 g ε-Caprolactam und 8.00 g Katalysator NL neu (Rheinchemie) eingewogen. Ein zweiter Dreihalskolben wurde mit 197.76 g ε-Caprolactam und 3.20 g Addonyl® 8108, einer 70 %igen Lösung eines aliphatischen Polyisocyanats in N-Ethyl-2-pyrrolidon (Rhein Chemie Rheinau GmbH) befüllt. Der Inhalt beider Kolben wurde in auf 135 °C vorgeheizten Ölbädern aufgeschmolzen. Anschließend wurde bei dieser Temperatur für 10 Minuten evakuiert. Dann wurden beide Kolben mit Stickstoff befüllt und die Ölbäder entfernt. Die Schmelzen wurden abgekühlt bis die Temperatur der Schmelzen 121 °C betrug. Dann wurden beide Lösungen vereinigt, kurz gerührt und in die auf 160 °C vortemperierte und mit N₂ überlagerte Form gegossen. In diese Form wurden zuvor Perlonfäden (nicht vorbehandelt, ca. 20 Stk.) mittels einer Stativklemme so aufgehängt, dass sie hälftig in die Monomermischung eintauchten.

Infolge des Polymerisationsfortschrittes löste sich nach etwa 15 Minuten der Gusskörper von der Formwandung und konnte entnommen und an der Luft abgekühlt werden. Die Fäden hatten sich fest mit der Matrix verbunden.

Die einpolymerisierten Fäden wurden in eine Instron-Prüfmaschine derart eingespannt, dass an einer Seite die freien Enden der Perlonfäden eingespannt wurden, auf der anderen Seite aber herauspräparierte Guss-PA6 Volumenelemente eingespannt wurden, die jeweils einen PA6 Faden in der Matrix einpolymerisiert enthielten. Diese Materialverbunde wurden Zugprüfungen unterzogen.

Als Ergebnis zeigten sich vergleichbare Zugfestigkeiten wie bei der Einspannung der reinen PA6 Monofilamente. Eine wie auch immer geartete Schädigung der Monofilamente, die über den Verlauf der Polymerisation zu erwarten gewesen wäre, hätte zu geringeren Zugfestigkeiten geführt. Gemessen wurden aber -wie bei den direkt eingespannten Perlon-Monofilamenten- etwa 350 MPa (Perlon-Fäden mit 0.55 mm Durchmesser).

Die Qualität der Anbindung der PA6 Faser an die Matrix wurde an Dünnschnitten mit Hilfe von lichtmikroskopischen und rasterkraftmikroskopischen Untersuchungen untersucht. Dabei zeigten sich direkt angrenzend an die Fadenoberfläche zwei klar getrennte, kristalline PA6-Hüllen, die eine sehr gute Anbindung der Faser an die Matrix aufzeigten. Der kristalline Aufbau dieser Hüllen unterschied sich deutlich sowohl von der Matrix als auch von den Verstärkungsfäden. Die Gesamtdicke beider Grenzschichten betrug 25 - 35 µm

## Patentansprüche

1. Verfahren zur Herstellung eines Faserverbund-Werkstoffs, **dadurch gekennzeichnet, dass** man
a) als Monomer wenigstens ein monomeres cyclisches Amid in Anwesenheit wenigstens eines Katalysators und in Anwesenheit wenigstens eines Aktivators auf einen Temperaturbereich von 100°C bis 200°C aufheizt und aufschmelzen lässt,
b) die Schmelze aus Stufe a) mit einer Polyamid-Verstärkungsstruktur in Kontakt bringt, bei der es sich um hochverstreckte Polyamidfäden handelt,
c) das Monomere durch Temperaturerhöhung auf 100°C bis 200°C erwärmt, polymerisiert und gegebenenfalls den so hergestellten Faserverbund-Werkstoff noch tempert, und
d) den als Gußkörper vorliegenden Faserverbund-Werkstoff aus der Form entnimmt.

2. Verfahren gemäß Anspruch 1, **dadurch gekennzeichnet, dass** als monomere cyclische Amide Verbindungen der allgemeinen Formel (I) 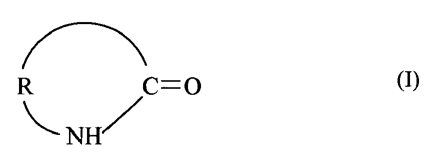 eingesetzt werden, wobei R eine Alkylengruppe mit 3 bis 13 Kohlenstoffatomen darstellt, bevorzugt ε-Caprolactam.

3. Verfahren gemäß der Ansprüche 1 oder 2, **dadurch gekennzeichnet, dass** im Falle von Mischungen solche aus ε-Caprolactam und Laurinlactam eingesetzt werden.

4. Verfahren gemäß der Ansprüche 1 bis 4, **dadurch gekennzeichnet, dass** als Katalysator solche aus der Gruppe bestehend aus Natriumcaprolactamat, Kaliumcaprolactamat, Bromid-Magnesiumcaprolactamat, Chlorid-Magnesiumcaprolactamat, Magnesium-bis-Caprolactamat, Natriumhydrid, Natrium, Natriumhydroxid, Natriummethanolat, Natriumethanolat, Natriumpropanolat, Natriumbutanolat, Kaliumhydrid, Kalium, Kaliumhydroxid, Kaliummethanolat, Kaliumethanolat, Kaliumpropanolat und Kaliumbutanolat eingesetzt werden; bevorzugt wird ein Katalysator ausgewählt aus der Gruppe bestehend aus Natriumhydrid, Natrium und Natriumcaprolactamat, besonders bevorzugt Natriumcaprolactamat und/oder eine Lösung von Natriumcaprolactamat in Caprolactam.

5. Verfahren gemäß der Ansprüche 1 bis 5, **dadurch gekennzeichnet, dass** als Aktivator Isocyanate, Uretdione, Carbodiimide, Säureanhydride und Säurehalogenide bzw. deren Umsetzungsprodukte mit dem Monomer eingesetzt werden, bevorzugt Uretdione oder Carbodiimide.

6. Verfahren gemäß Anspruch 5, **dadurch gekennzeichnet, dass** als Isocyanate Verbindungen der Reihe aliphatische Diisocyanate, insbesondere Butylendiisocyanat, Hexamethylendiisocyanat, Octamethylendiisocyanat, Decamethylendiisocyanat, Undecamethylendiisocyanat, Dodecamethylendiisocyanat, 4,4'-Methylenbis(cyclohexylisocyanat), aromatische Diisocyanate, insbesondere Toluyldiisocyanat, Isophorondiisocyanat, 4,4'-Methylenbis(phenyl)isocyanat oder Polyisocyanate, insbesondere Isocyanate von Hexamethylendiisocyanat, Allophanate, insbesondere Ethylallophanat oder Mischungen der genannten Isocyanate als Aktivator eingesetzt werden.

7. Verfahren gemäß Anspruch 5, **dadurch gekennzeichnet, dass** als Säurehalogenide Verbindungen der Reihe aliphatische Disäurehalogenide, insbesondere Butylen-disäurechlorid, Butylen-disäurebromid, Hexamethylen-disäurechlorid, Hexamethylen-disäurebromid, Octamethylen-disäurechlorid, Octamethylen-disäurebromid, Decamethylen-disäurechlorid, Decamethylen-disäurebromid, Dodecamethylen-disäurechlorid, Dodecamethylen-disäurebromid, 4,4'-Methylen-bis-(cyclohexysäurechlorid), 4,4'-Methylenbis(cyclohexylsäurebromid); als auch aromatische Disäurehalogenide, insbesondere Toluylmethylendisäurechlorid, Toluylmethylendisäurebromid, Isophoron-disäurechlorid, Isophoron-disäurebromid, 4,4'-Methylenbis(phenyl)säurechlorid, 4,4'-Methylenbis(phenyl)säurebromid oder Mischungen der genannten Säurehalogenide als Aktivator eingesetzt werden.

8. Verfahren gemäß Anspruch 5, **dadurch gekennzeichnet, dass** als Aktivator einzusetzende Uretdione aus monomeren aliphatischen Verbindungen ausgewählt aus der Gruppe Isophorondiisocyanat, 1,4-Cyclohexyldiisocyanat, 1,1 -Methylen-bis-(4-isocyanatocyclohexan), 1,2-Bis-(4-isocyanatononyl)-3-heptyl-4-pentyl-cyclohexan und Hexamethylen-1,6-diisocyanat hergestellt werden, bevorzugt aus Isophorondiisocyanat und Hexamethylen-1,6-diisocyanat.

9. Verfahren gemäß Anspruch 8, **dadurch gekennzeichnet, dass** als Aktivator ein Uretdion eingesetzt wird, welches ausgehend von einem aromatischen Isocyanat erhalten wird und das aromatische Isocyanat vorzugsweise 6 bis 20 Kohlenstoffatome, besonders bevorzugt 6 bis 15 Kohlenstoffatome, aufweist, besonders bevorzugt 2,4-Diisocyanatotoluol, 2,6-Diisocyanatotoluol, 1,5-Naphthylendiisocyanat, 4,4'-Methylen-diphenyldiisocyanat, 1,3-Bis-(3-isocyanato-4-methylphenyl)-2,4-dioxodiazetidin, N,N'-Bis-(4-methyl-3-isocyanatophenyl)-Harnstoff und Tetramethylxylylendiisocyanat, insbesondere 2,4-Diisocyanatotoluol, 2,6-Diisocyanatotoluol und 4,4'-Methylen-bis(phenyldiisocyanat), insbesondere besonders bevorzugt 2,4-Diisocyanatotoluol und 4,4'-Methylen- bis(phenyldiisocyanat).

10. Verfahren gemäß Anspruch 5, **dadurch gekennzeichnet, dass** als Carbodiimide polymere Carbodiimide der Formel (II)
R¹-(-N=C=N-R²-)ₘ-R³ (II)
in der m einer ganzen Zahl von 2 bis 500, bevorzugt 2 bis 50, ganz besonders bevorzugt 2 bis 20 entspricht,
R¹ = R²-NCO, R²-NHCONHR⁴, R²-NHCONR⁴R⁵ oder R²-NHCOOR⁶,
R² = C₁- C₁₈-Alkylen, C₅-C₁₈-Cycloalkylen-, Arylen und/oder C₇-C₁₈- Aralkylen und
R³ = -NCO, -NHCONHR⁴, -NHCONR⁴R⁵ oder -NHCOOR⁶ ist,
wobei in R¹ unabhängig voneinander R⁴ und R⁵ gleich oder verschieden sind und einen C₁-C₆-Alkyl-, C₆-C₁₀-Cycloalkyl- oder C₇-C₁₈-Aralkylrest darstellen und R⁶ eine der Bedeutungen von R¹ hat oder einen Polyester- oder einen Polyamidrest oder -(CH₂)₁-(O-(CH₂)ₖ-O)_{g}-R⁴ bedeutet,
mit 1= 1-3, k= 1-3, g = 0-12 und
R⁴= H oder C₁-C₄-Alkyl
eingesetzt werden.

11. Verfahren gemäß Anspruch 10, **dadurch gekennzeichnet, dass** man die einzusetzenden Carbodiimide durch Kondensation von Diisocyanaten, bevorzugt 2,4,6-Triisopropylphenyl-1,3-diisocyanat, 2,4,6-Triethylphenyl-1,3-diisocyanat, 2,4,6-Trimethyl-phenyl-1,3-diisocyanat, 2,4'-Diisocyanatodiphenylmethan, 3,3',5,5'-Tetraisopropyl-4,4'-diisocyanatodiphenylmethan, 3,3',5,5'-Tetraethyl-4,4'-diisocyanato-diphenyl-methan, Tetramethylxyloldiisocyanat, 1,5-Naphthalindiisocyanat, 4,4'-Diphenylmethandiisocyanat, 4,4'-Diphenyldimethyl-methan-diisocyanat, 1,3-Phenylendiisocyanat, 1,4-Phenylendiisocyanat, 2,4-Tolylendiisocyanat, 2,6-Tolylendiisocyanat, ein Gemisch aus 2,4-Tolylendiisocyanat und 2,6-Tolylendiisocyanat, Hexamethylendiisocyanat, Cyclohexan-1,4-diisocyanat, Xylylendiisocyanat, Isophorondiisocyanat, Dicyclohexylmethan-4,4'-diisocyanat, Methylcyclohexandiisocyanat, Tetramethylxylylen-diisocyanat sowie 1,3,5-Triisopropylbenzol-2,4-diisocyanat oder deren Gemische, unter Abspaltung von Kohlendioxid bei erhöhten Temperaturen, bevorzugt bei 40 °C bis 200°C, in Gegenwart von Katalysatoren erhält.

12. Verfahren gemäß der Ansprüche 1 bis 11, **dadurch gekennzeichnet, dass** die Bereitstellung der mit Katalysator und Aktivator versetzten Monomerschmelze für den Verfahrensschritt b) entweder nach Variante a1) als sogenanntes Zwei-Topf-Verfahren, oder nach Variante a2) durchgeführt wird wobei Aktivator, Katalysator und Additive bei geringer Temperatur zunächst im monomeren Caprolactam gelöst oder im Extruder eine Mischung -auch unterhalb des Schmelzpunktes- hergestellt wird, die Mischung auf Schmelztemperatur erwärmt und dann für die Tränkung der Polyamidfäden verwendet wird, oder nach Variante a3) als offenes Verfahren durchgeführt wird.

13. Verfahren gemäß Anspruch 12, **dadurch gekennzeichnet, dass** zur Durchführung der Variante a1) zwei Mischungen aus Katalysator und Lactam sowie aus Aktivator und Lactam in Form von flüssigen Schmelzen frisch vor der Polymerisation zunächst getrennt voneinander hergestellt, dann miteinander vermischt und anschließend in einer Gussform polymerisiert werden.

14. Verfahren gemäß Anspruch 12, **dadurch gekennzeichnet, dass** die Variante a3) bei klassischen Guss-PA 6 Anwendungen im Rotations-Schleuderguss durchgeführt wird.

15. Verfahren gemäß der Ansprüche 1 bis 14, **dadurch gekennzeichnet, dass** zusätzlich zu den Komponenten in Stufe a) mindestens eine weitere Komponente, ausgewählt aus Füll- und/oder Verstärkungsstoffen, Polymeren oder weiteren Zusatzstoffen eingesetzt wird und die sich chemisch von den in Stufe a) einzusetzenden Komponenten - cyclisches Amid, Katalysator, Aktivator- unterscheiden.

## Claims

1. Process for producing a fibre composite material, **characterized in that**
a) by way of monomer at least one monomeric cyclic amide is in the presence of at least one catalyst and in the presence of at least one activator heated to a temperature range of 100°C to 200°C and allowed to melt,
b) the melt of stage a) is brought into contact with a reinforcing polyamide structure comprising highly drawn polyamide threads,
c) the monomer is heated by temperature elevation from 100°C to 200°C, polymerized and optionally the fibre composite material thus obtained is conditioned, and
d) the fibre composite material is removed from the mould in the form of a casting.

2. Process according to Claim 1, **characterized in that** monomeric cyclic amides used are compounds of general formula (I) 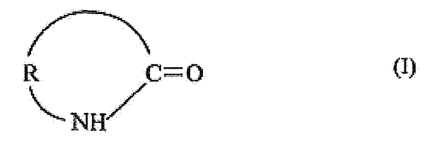 where R represents an alkylene group of 3 to 13 carbon atoms, preferably ε-caprolactam.

3. Process according to Claims 1 or 2, **characterized in that** in the case of mixtures those of ε-caprolactam and laurolactam are used.

4. Process according to Claims 1 to 4, **characterized in that** by way of catalyst there are used those from the group consisting of sodium caprolactamate, potassium caprolactamate, bromide magnesium caprolactamate, chloride magnesium caprolactamate, magnesium biscaprolactamate, sodium hydride, sodium, sodium hydroxide, sodium methoxide, sodium ethoxide, sodium propoxide, sodium butoxide, potassium hydride, potassium, potassium hydroxide, potassium methoxide, potassium ethoxide, potassium propoxide and potassium butoxide; preference is given to a catalyst selected from the group consisting of sodium hydride, sodium and sodium caprolactamate, more preferably sodium caprolactamate and/or a solution of sodium caprolactamate in caprolactam.

5. Process according to Claims 1 to 5, **characterized in that** by way of activator there are used isocyanates, uretdiones, carbodiimides, acid anhydrides and acid halides and/or their reaction products with the monomer, preferably uretdiones or carbodiimides.

6. Process according to Claim 5, **characterized in that** isocyanates used as activator are compounds from the series: aliphatic diisocyanates, in particular butylene diisocyanate, hexamethylene diisocyanate, octamethylene diisocyanate, decamethylene diisocyanate, undecamethylene diisocyanate, dodecamethylene diisocyanate, 4,4' - methylene bis (cyclohexyl) isocyanate, aromatic diisocyanates, in particular tolyl diisocyanate, isophorone diisocyanate, 4,4'-methylenebis(phenyl) isocyanate or polyisocyanates, in particular isocyanates of hexamethylene diisocyanate, allophanates, in particular ethyl allophanate or mixtures of said isocyanates.

7. Process according to Claim 5, **characterized in that** the acid halides used as activator are compounds of the series: aliphatic diacyl halides, in particular butylenediacyl chloride, butylenediacyl bromide, hexamethylenediacyl chloride, hexamethylenediacyl bromide, octamethylenediacyl chloride, octamethylenediacyl bromide, decamethylenediacyl chloride, decamethylenediacyl bromide, dodecamethylenediacyl chloride, dodecamethylenediacyl bromide, 4,4'-methylenebis(cyclohexyl acid chloride), 4,4'-methylenebis(cyclohexylacyl bromide); as well as aromatic diacyl halides, in particular tolylmethylenediacyl chloride, tolylmethylenediacyl bromide, isophoronediacyl chloride, isophoronediacyl bromide, 4,4'-methylene- bis(phenyl)acyl chloride, 4,4'-methylene- bis(phenyl)acyl bromide or mixtures of said acyl halides.

8. Process according to Claim 5, **characterized in that** uretdiones to be used as activator are prepared from monomeric aliphatic compounds selected from the group isophorone diisocyanate, 1,4-cyclohexyl diisocyanate, 1,1-methylenebis(4-isocyanatocylcohexane), 1,2-bis(4-isocyanato-nonyl)-3-heptyl-4-pentylcyclohexane and hexamethylene 1,6-diisocyanate, preferably from isophorone diisocyanate and hexamethylene 1,6-diisocyanate.

9. Process according to Claim 8, **characterized in that** the activator used is a uretdione obtained by proceeding from an aromatic isocyanate and the aromatic isocyanate preferably has 6 to 20 carbon atoms and more preferably has 6 to 15 carbon atoms, more preferably 2,4-diisocyanatotoluene, 2,6-diisocynatotoluene, 1,5-naphthylene diisocyanate, 4,4'-methylenediphenyl diisocyanate, 1,3-bis(3-isocyanato-4-methylphenyl)-2,9-dioxodiazetidine, N,N'-bis(4-methyl-3-isocyanato-phenyl)urea and tetramethylxylylene diisocyanate, in particular 2,4-diisocyanatotoluene, 2,6-diisocyanatotoluene and 4,4'-methylenebis(phenyl diisocyanate), yet more preferably 2,4-diisocyanatotoluene and 4,4'-methylenebis(phenyl diisocyanate).

10. Process according to Claim 5, **characterized in that** the carbodiimides used are polymeric carbodiimides of formula (II)
R¹-(-N=C=N-R²-)ₘ-R³ (II)
where m is an integer from 2 to 500, preferably 2 to 50 and more preferably 2 to 20,
R¹ = R²-NCO, R²-NHCONHR⁴, R²-NHCONR⁴R⁵ or R²-NGHCOOR⁶, R² = C₁-C₁₈-alkylene, C₅-C₁₈-cycloalkylene, arylene and/or C₇-C₁₈-aralkylene, and
R³ = -NCO, -NHCONHR⁴, -NHCONR⁴R⁵ or -NHCOOR⁶,
where R⁴ and R⁵ in R¹ each independently are the same or different and represent C₁-C₆-alkyl, C₆-C₁₀-cycloalkyl or C₇-C₁₈-aralkyl and R⁶ has one of the meanings of R¹ or denotes a polyester moiety, a polyamide moiety or -(CH₂)₁-(O-(CH₂)ₖ-O)_{g}-R⁴
where 1 = 1-3, k = 1-3, g = 0-12 and
R⁴ = H or C₁-C₄-alkyl.

11. Process according to Claim 10, **characterized in that** the carbodiimides to be used are obtained by condensation of diisocyanates, preferably 2,4,6-triisopropylphenyl 1,3-diisocyanate, 2,4,6-triethylphenyl 1,3-diisocyanate, 2,4,6-trimethylphenyl 1,3-diisocyanate, 2,4'-diisocyanatodiphenylmethane, 3,3',5,5'-tetraisopropyl-4,4'-diisocyanatodiphenylmethane, 3,3',5,5'-tetraethyl-4,4'-diisooyanatodiphenylmethane, tetramethylxylene diisocyanate, 1,5-naphthalene diisocyanate, 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, a mixture of 2,4-tolylene diisocyanate and 2,6-tolylene diisocyanate, hexamethylene diisocyanate, cyclohexane 1,4-diisocyanate, xylylene diisocyanate, isophorone diisocyanate, dicyclohexylmethyl 4,4'-diisocyanate, methylcyclohexane diisocyanate, tetramethylxylene diisocyanate and also 1,3,5-triisopropylbenzene 2,4-diisocyanate or mixtures thereof, by detachment of carbon dioxide at elevated temperatures, preferably at 40°C to 200°C, in the presence of catalysts.

12. Process according to Claims 1 to 11, **characterized in that** providing the catalyst- and activator-admixed monomer melt for process step b) is carried out either according to variant a1) as so-called two-pot process or according to variant a2), in which case activator, catalyst and additives are initially dissolved in the caprolactam monomer at low temperature or a mixture is produced in an extruder - even below the melting point, the mixture is heated to melting temperature and then used for impregnating the polyamide threads, or is carried out according to variant a3) as open process.

13. Process according to Claim 12, **characterized in that** to carry out variant a1) two mixtures of catalyst and lactam on the one hand and of activator and lactam on the other are first freshly prepared separately from each other in the form of liquid melts before polymerisation, then mixed with one another and subsequently polymerized in a castling mould.

14. Process according to Claim 12, **characterized in that** variant a3) is carried out in classic cast nylon-6 applications by roto/centrifugal casting.

15. Process according to Claims 1 to 14, **characterized in that** in addiction to the components in stage a) at least one further component selected from filler and/or reinforcing materials, polymers or further additive is used and which differ chemically from the components to be used in stage a) - cyclic amide, catalyst, activator.

## Revendications

1. Procédé de fabrication d'un matériau composite fibreux, **caractérisé en ce que**
a) au moines un amide cyclique monomère en tant que monomère est porté dans une plage de température allant de 100 °C à 200 °C et laissé fondre en présence d'au moins un catalyseur et en présence d'au moins un activateur,
b) la masse fondue de l'étape a) est mise en contact avec une structure de renforcement en polyamide, celle-ci consistant en des fils de polyamide hautement étirés,
c) le monomère est porté à une température de 100 °C à 200 °C par élévation de la température, polymérisés et le matériau composite fibreux ainsi fabriqué est éventuellement encore recuit, et
d) le matériau composite fibreux se présentant sous la forme d'un corps coulé est extrait du moule.

2. Procédé selon la revendication 1, **caractérisé en ce que** des composés de formule générale (I) sont utilisés en tant qu'amides cycliques monomères 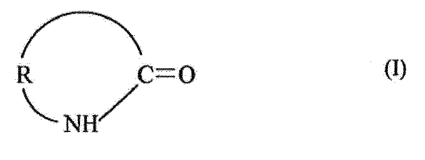 R représentant un groupe alkylène contenant 3 à 13 atomes de carbone, de préférence l'ε-caprolactame.

3. Procédé selon les revendications 1 ou 2, **caractérisé en ce qu'**en cas de mélanges, des mélanges d'ε-caprolactame et de laurine-lactame sont utilisés.

4. Procédé selon les revendications 1 à 4, **caractérisé en ce qu'**en tant que catalyseur, des catalyseurs du groupe constitué par le caprolactame de sodium, le caprolactame de potassium, le caprolactame de bromure-magnésium, le caprolactame de chlorure-magnésium, le bis-caprolactame de magnésium, l'hydrure de sodium, le sodium, l'hydroxyde de sodium, le méthanolate de sodium, l'éthanolate de sodium, le propanolate de sodium, le butanolate de sodium, l'hydrure de potassium, le potassium, l'hydroxyde de potassium, le méthanolate de potassium, l'éthanolate de potassium, le propanolate de potassium et le butanolate de potassium sont utilisés ; de préférence un catalyseur choisi dans le groupe constituée par l'hydrure de sodium, le sodium et le caprolactame de sodium, de manière particulièrement préférée le caprolactame de sodium et/ou une solution de caprolactame de sodium dans du caprolactame.

5. Procédé selon les revendications 1 à 5, **caractérisé en ce qu'**en tant qu'activateur, des isocyanates, des uretdiones, des carbodiimides, des anhydrides d'acides et des halogénures diacides cru leurs produits de réaction avec le monomère sont utilisés, de préférence des uretdiones ou des carbodiimides.

6. Procédé selon la revendication 5, **caractérisé en ce qu'**en tant qu'isocyanates, des composés de la série constituée par les diisocyanates, aliphatiques, notamment le diisocyanate, de butylène, le diisocyanate, d'hexaméthylène, le diisocyanate d'octaméthylène, le diisocyanate de décaméthylène, le diisocyanate d'undécaméthylène, le diisocyanate de dodécaméthylène, le bis (cyclohexylisocyanate) de 4,4'-méthylène, les diisocyanates aromatiques, notamment le diisocyanate de toluyle, le diisocyanat, d'isophorone, le bis(phényl)isocyanate de 4,4'-méthylène, ou les polyisocyanates, notamment les isocyanates de diisocyanate d'hexaméthylène, les allophanates, notamment l'allophanate d'éthyle, ou des mélanges des isocyanates cités sont utilisés en tant qu'activateur.

7. Procédé selon la revendication 5, **caractérisé en ce qu'**en tant qu'halogénures d'acides, des composés de la série constituée par les halogénures de diacides aliphatiques, notamment le chlorure de l'acide butylènedioïque, le bromure de l'acide butylènedioïque, le chlorure de l'acide hexaméthylènedioïque, le bromure de l'acide hexaméthylènedioïque, le chlorure de l'acide octaméthylènedioïque, le bromure de l'acide octaméthylènedioïque, le chlorure de l'acide décaméthylènedioïque, le bromure de l'acide décaméthylènedioïque, le chlorure de l'acide dodécaméthylènedioïque, le bromure de l'acide dodécaméthylènedioïque, le chlorure de l'acide 4,4'méthylène-bis(cyclohexylique), le bromure de l'acide 4,4'méthylène-bis(cyclohexylique) ; ainsi que les halogénures de diacides aromatiques, notamment le chlorure de l'acide toluylméthylènedioïque, le bromure de l'acide toluylméthylènedioïque, le chlorure de l'acide isophoronedioïque, le bromure de l'acide isophoronedioïque, le chlorure de l'acide 4,4'-méthylènebis(phénylique), le bromure de l'acide 4,4'-méthylènebis(phénylique) ou des mélanges des halogénures d'acides mentionnés sont utilisés en tant qu'activateur.

8. Procédé selon la revendication 5, **caractérisé en ce que** des uretdiones à utiliser en tant qu'activateur sont fabriquées à partir de composés aliphatiques monomères choisis dans le groupe constitué par le diisocyanate d'isophorone, le diisocyanate de 1,4-cyclohexyle, le 1,7-méthyléne-bis-(4-isocyanatocyclohexane), le 1,2-bis- (4-isocyanatononyl)-3-heptyl-4-pentyl-cyclohexane et le 1,6-diisocyanate d'hexaméthylène, de préférence à partir de diisocyanate d'isophorone et de 1,6-diisocyanate d'hexaméthylène.

9. Procédé selon la revendication 8, **caractérisé en ce qu'**une uretdione est utilisée en tant qu'activateur, qui est obtenue à partir d'un isocyanate aromatique, l'isocyanate aromatique comprenant de préférence 6 à 20 atomes de carbone, de manière particulièrement préférée 6 à 15 atomes de carbone, de manière particulièrement préférée le 7,9-diisocyanatotoluène, le 2,6-diisocyanatotoluène, le diisocyanate de 1,5-naphtylène, le diphényldiisocyanate de 4,4'-méthylène, la 1,3-bis-(3-isocyanato-9-méthylphényl)-2,4-dioxodiazétidine, la N,N'-bis-(4-méthyl-3-isocyanatophényl)-urée et le diisocyanate de tétraméthylxylylène, notamment le 2,4-diisocyanatotoluène, le 2,6-diisocyanatotoluène et le bis(phényldiisocyanate) de 4,4'-méthylène, de manière particulièrement préférée le 2,4-diisocyanatotoluène et le bis(phényldiisocyanate) de 4,4'-méthylène.

10. Procédé selon la revendication 5, **caractérisé en ce que** des carbodiimides polymères de formule II sont utilisés en tant que carbodiimides
R¹-(-N=C=N-R²-)ₘ-R³ (II)
m correspondant à un nombre entier de 2 à 500, de préférence de 2 à 50, de manière tout particulièrement préférée de 2 à 20,
R¹ = R²-NCO, R²-NHCONHR⁴, R²-NHCONR⁴R⁵ ou R²-NHCOOR⁶,
R² = alkylène en C₁-C₁₈, cycloalkylène en C₅-C₁₈, amylène et/ou aralkylène en C₇-C₁₈, et
R³ = -NCO, -NHCONHR₄, -NHCONR⁴R⁵ ou -NHCOOR⁶,
R⁴ et R⁵ dans R¹ étant indépendamment l'un de l'autre identiques ou différents et représentant un radical alkyle en C₁-C₆, cycloalkyle en C₆-C₁₀ ou aralkyle en C₇-C₁₈, et R⁶ ayant une des significations de R¹ ou signifiant un radical polyester ou polyamide ou -(CH₂)₁-(O-(CH₂)ₖ-O)_{g}-R⁴,
avec 1 = 1 à 3, k = 1 à 3, g = 0 à 12, et
R⁴ = H ou alkyle en C₁-C₄.

11. Procédé selon la revendication 10, **caractérisé en ce que** les carbodiimides à utiliser sont obtenus par condensation de diisocyanates, de préférence de 1,3-diisocyanate de 2,4,6-triisopropylphényle, de 1,3-diisocyanate de 2,4,6-triéthylphényle, de 1,3-diisocyanate de 2,4,6-triméthyl-phényle, de 2,4'-diisocyanatodiphénylméthane, de 3,3',5,5'-tétraisopropyl-4,4'-diisocyanato-diphénylméthane, de 3,3',5,5'-tétraéthyl-4,4'-diisocyanato-diphénylméthane, de diisocyanate de tétraméthylxylène, de diisocyanate de 1,5-naphtaline, de diisocyanate de 4,4'-diphénylméthane, de diisocyanate de 4,4'-diphényldiméthyl-méthane, de diisocyanate de 1,3-phénylène, de diisocyanate de 1,4-phénylène, de diisocyanate de 2,4-tolylène, de diisocyanate de 2,6-tolylène, d'un mélange de diisocyanate de 2,4-tolylène et de diisocyanate de 2,6-tolylène, de diisocyanate d'hexaméthylène, de 1,4-diisocyanate de cyclohexane, de diisocyanate de xylylène, de diisocyanate d'isophorone, de 4,4'-diisocyanate de dicyclohexylméthane, de diisocyanate de méthylcyclohexane, de diisocyanate de tétraméthylxylylène, ainsi que de 2,4-diisocyanate de 1,3,5-triisopropylbenzène ou leurs mélanges, avec clivage de dioxyde de carbone à des températures élevées, de préférence de 40 °C, à 200 °C, en présence de catalyseurs.

12. Procédé selon les revendications 1 à 11, **caractérisé en ce que** la préparation de la masse fondue de monomères mélangée avec le catalyseur et l'activateur pour l'étape de procédé b) est réalisée soit selon une variante a1) selon un procédé dit à deux cuves, soit selon une variante a2), selon laquelle l'activateur, le catalyseur et les additifs sont tout d'abord dissous à température basse dans le caprolactame monomère ou un mélange est fabriqué dans une extrudeuse, également en dessous du point de fusion, le mélange est porté à la température de fusion, puis utilisé pour l'imprégnation des fils de polyamide, soit selon une variante a3) par un procédé ouvert.

13. Procédé selon la revendication 12, **caractérisé en ce que**, pour la réalisation de la variante a1), deux mélanges de catalyseur et de lactame, ainsi que d'activateur et de lactame sont tout d'abord fraîchement préparés avant la polymérisation séparément l'un de l'autre sous la forme de masses fondues liquides, puis mélangés l'un avec l'autre, puis polymérisés dans un moule de coulée.

14. Procédé selon la revendication 12, **caractérisé en ce que** la variante a3) est réalisée par coulée centrifuge rotationnelle lors des applications classiques de PA-6 coulé.

15. Procédé selon les revendications 1 à 14, **caractérisé en ce qu'**en plus des composants de l'étape a), au moins un composant supplémentaire, choisi parmi les charges et/ou les matières renforçantes, les polymères ou les additifs supplémentaires, est utilisé et diffère chimiquement des composants utilisés à l'étape a), l'amide cyclique, le catalyseur et l'activateur.
